# EUROPEAN PATENT SPECIFICATION

(11) **EP 2 963 287 B1**
(45) Date of publication and mention of the grant of the patent: **28.02.2018**
(21) Application number: 15175055.1
(22) Date of filing: 02.07.2015
(51) Int. Cl.: F03D 7/02, F03D 1/00, F03D 80/00

(54) **WIND TURBINE GENERATOR AND METHOD OF ADJUSTING BLADE PITCH ANGLE THEREOF**
WINDTURBINENGENERATOR UND VERFAHREN ZUR EINSTELLUNG DES SCHAUFELANSTELLWINKELS DAVON
GÉNÉRATEUR DE TURBINE ÉOLIENNE ET PROCÉDÉ DE RÉGLAGE D'ANGLE DE PAS DE PALE

(30) Priority: 03.07.2014 JP 2014137395
(43) Date of publication of application: 06.01.2016
(73) Proprietor: Hitachi, Ltd., Tokyo 100-8280 (JP)
(72) Inventor: NAKANISHI, Yasuaki, Tokyo, 100-8280 (JP); TOBINAGA, Ikuo, Tokyo, 100-8280 (JP)
(74) Representative: MERH-IP Matias Erny Reichl Hoffmann Patentanwälte PartG mbB

(56) References cited:
- WO-A1-2014/097433
- US-A1- 2011 187 107
- US-A1- 2011 260 461

## Description

### FIELD OF THE INVENTION

The present invention relates to a windturbine generator and a method of adjusting a blade pitch angle thereof, and more specifically to a windturbine generator and a method of adjusting a blade pitch angle thereof which are suitable for adjusting the blade pitch angle when a rotor of a windmill is fixed.

### BACKGROUND OF THE INVENTION

Generally, a windturbine generator schematically includes: a rotor in which three blades of an airfoil shape in cross section are attached radially from a hub; a nacelle connected to the hub, pivotably supporting the rotor via a rotary shaft extending in a substantially horizontal direction, and storing therein a generator connected to the rotary shaft; and a tower arranged in a substantially vertical direction and also rotatably supporting the nacelle, and also includes: a yaw driving unit capable of freely driving and controlling yaw motion that is rotary motion of the nacelle; a yaw brake putting a brake on this yaw motion; and a rotary shaft brake putting a brake on the rotor rotation.

The windturbine generator requires mechanical fixation of the rotor upon its maintenance (this state in which the rotor is mechanically fixed is hereinafter referred to as rotor-locking). At time of this rotor-locking, the rotor is mechanically and forcefully fixed, and thus there is a risk that excessive load is imposed on a mechanism of fixing the rotor.

To reduce this load imposed on the rotor lock mechanism, wind load on the rotor which causes the aforementioned load needs to be reduced.

For example, what is described in Japanese Patent Application No. 5237455 and Japanese Patent Application Laid-open No. 2009-162057 reduces this load imposed on the rotor.

Japanese Patent Application No. 5237455 describes a pitch angle controller in which, for avoiding unnecessary load imposed on a blade pitch angle driver at a normal wind speed and also in wind speed distribution provided thereby and also for reducing load imposed on the blade for wind speed distribution when strong wind is received, a set value indicating that wind received by a windturbine generator has biased wind speed distribution is previously set, and if load measured by a measuring device or a value based on the load is within the set value, a command value in accordance with the load within a predetermined limited value is outputted, and only if the load or the value based on the load exceeds the set value, a command value in accordance with the load beyond the limited value is outputted.

Japanese Patent Application Laid-open No. 2009-162057 describes that in order to prevent breakage of a windmill through wind load reduction achieved by switching plural blades to a shelter posture in which they are inclined towards a downwind side while holding an up-wind posture at time of strong wind, based on a signal indicating that a wind speed is equal to or larger than a preset wind speed and a rotation phase signal detected by a rotation phase detecting electromagnetic pickup, a control unit actuates a pitch angle adjustment mechanism and a rotor braking device of each of the three blades in a manner such that the rotor is stopped at a rotation direction position at which the switching to the shelter posture is possible without interference between the blades and a tower, and actuates an inclination driver after the rotor rotation stops to thereby incline the three blades towards the shelter posture.

As described above, the conventional windturbine generator has a risk that as a result of receiving such wind load that rotates the rotor in a rotor-locking state, excessive load is imposed on the rotor lock mechanism. However, in Japanese Patent Application No. 5237455 and Japanese Patent Application Laid-open No. 2009-162057 described above, no measure for reducing the excessive load imposed on the rotor lock mechanism is described.

US 2011/187107 A1 relates to a wind turbine generator capable of easily stopping wind turbine blades at an appropriate position in a short time is provided. A pitch control device controls the pitch angle to a feather side to reduce the rotational speed of the wind turbine blades to a predetermined speed upon receiving a stop signal instructing stopping the rotation of the wind turbine blades, and, on the basis of a detection result of an angle detection device, a brake disc and a brake device are driven and controlled so that the rotation of the wind turbine blades is stopped at a desired position.

### SUMMARY OF THE INVENTION

In view of the problem described above, the present invention has been made, and it is an object of the present invention to provide a windturbine generator capable of reducing load imposed on a rotor lock mechanism, and a method of adjusting a blade pitch angle thereof.
To address the problem described above, a windturbine generator of the present invention includes: a rotor composed of a hub and a blade; a nacelle pivotably supporting the rotor via a rotary shaft connected to the hub and storing therein a power generator connected to the rotary shaft; a tower supporting the nacelle; a pitch actuator changing and thereby adjusting a pitch angle of the blade; and a pitch controller outputting a command value to the pitch actuator, wherein, at the pitch controller, a detected command for stopping the rotor is outputted to the pitch actuator after confirmation that shifting to a manual state has occurred and then the rotor is mechanically fixed , the pitch actuator increases the pitch angle of the blade to make the angle larger than a pitch angle of the blade in a feather state during deceleration based on the command for stopping the rotor from the pitch controller.
To address the problem described above, in a method of adjusting a blade pitch angle of a windturbine generator, the generator includes: a rotor composed of a hub and a blade; a nacelle pivotably supporting the rotor via a rotary shaft connected to the hub and storing therein a power generator connected to the rotary shaft; a tower supporting the nacelle; a pitch actuator changing and thereby adjusting a pitch angle of the blade; and a pitch controller outputting a command value to the pitch actuator, and/or, to change and thereby adjust the pitch angle of the blade with the pitch actuator based on the command value from the pitch controller, a command for stopping the rotor detected at the pitch controller is outputted to the pitch actuator, the rotor is mechanically fixed after confirmation that shifting to a manual state has occurred, and then, based on the command for stopping the rotor from the pitch controller, the pitch actuator increases the pitch angle of the blade to make the angle larger than a pitch angle of the blade in a feather state during deceleration.
With the present invention, the load imposed on the rotor lock mechanism can be reduced.

### BRIEF DESCRIPTION OF THE DRAWINGS

FIG. 1 is a schematic side view showing a partial cross section of a windturbine generator according to a first embodiment of the present invention;
FIG. 2 is a view showing a blade and a device adjusting a pitch angle of the blade in the windturbine generator of FIG. 1;
FIG. 3 is a view showing a partial cross section of a rotor lock mechanism in the windturbine generator according to the first embodiment of the present invention;
FIG. 4A is a view showing configuration for limiting an increase in the blade pitch angle in the windturbine generator according to the first embodiment of the present invention, in a fine state in view of the blade from a blade tip end side (from the right side of FIG. 2);
FIG. 4B is a view showing configuration for limiting an increase in the blade pitch angle in the windturbine generator according to the first embodiment of the present invention, in a normal feather state in view of the blade from the blade tip end side (from the right side of FIG. 2) ;
FIG. 4C is a view showing configuration for limiting an increase in the blade pitch angle in the windturbine generator according to the first embodiment of the present invention, in a state realized when a rotor is locked in view of the blade from the blade tip end side (from the right side of FIG. 2);
FIG. 5 is a flow view showing a method of adjusting a blade pitch angle of the windturbine generator according to the first embodiment of the present invention; and
FIG. 6 is a view illustrating another example of a state of the rotor lock mechanism used in the windturbine generator according to the first embodiment of the present invention.

### DETAILED DESCRIPTION OF THE PREFERRED EMBODIMENTS

Hereinafter, based on the embodiment shown, a windturbine generator and a method of adjusting a blade pitch angle thereof according to the present invention will be described. In each of the drawings, the same numerals are used for the same components.

### [First Embodiment]

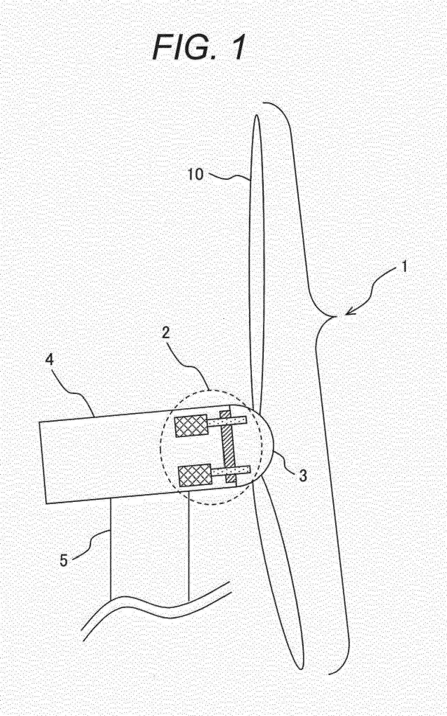

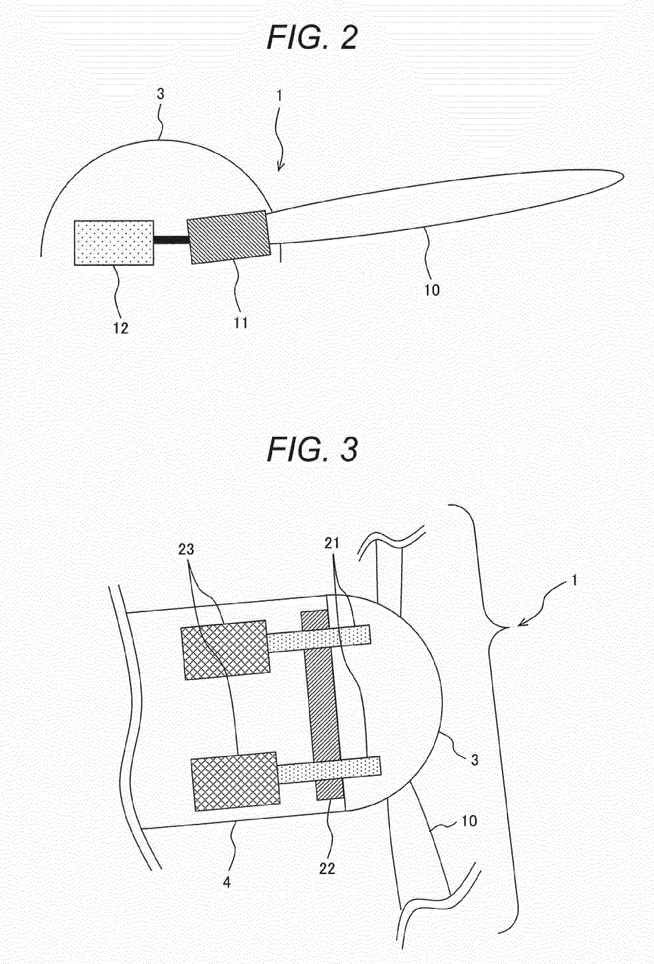

FIGS. 1 and 2 show a windturbine generator according to a first embodiment of the present invention. As shown in the figures, the windturbine generator of this embodiment is generally composed of: a rotor 1 composed of a hub 3 and a blade 10; a nacelle 4 which pivotally supports the rotor 1 via a rotary shaft (not shown) connected to the hub 3 and which stores therein a generator (not shown) connected to the rotary shaft; a tower 5 supporting this nacelle 4; a pitch actuator 11 changing and adjusting a pitch angle of the blade 10 for adjusting wind load imposed on the blade 10; a pitch controller 12 outputting a command value for moving the pitch actuator 11; and a rotor lock mechanism 2 housed in the nacelle 4 and fixing the rotor 1 so as to avoid rotation of the rotor 1. Installed at a bottom part of the tower 5 is a control board (not shown) performing various controls, and the pitch actuator 11 and the pitch controller 12 are installed in the hub 3.

In this embodiment, a command for stopping the rotor 1 is transmitted from the control board to the pitch controller 12, the command for stopping the rotor 1 which command has been detected by the pitch controller 12 is outputted to the pitch actuator 11, and in the pitch actuator 11, based on the command for stopping the rotor 1 from the pitch controller 12, the pitch angle of the blade 10 is made larger than a pitch angle of the blade 10 in a feather state during deceleration (with a rotation angle of approximately 0). Specifically, after confirmation that power generation has stopped and a rotation speed of the rotor 1 has turned 0 and also confirmation that shifting to a manual state (to be described later) has occurred, the rotor lock mechanism 2 mechanically fixes the rotor 1, and then the pitch angle of the blade 10 is made larger than the pitch angle of the blade 10 in the feather state during deceleration.

This will be described below.

When the pitch controller 12 has stopped the power generation and such a command that stops the rotation of the rotor 1 has been received by the pitch controller 12, the blade pitch angle is increased to a feather angle. Upon confirmation that the rotation speed of the rotor 1 has reached 0, shifting to such a state that permits manual adjustment of the various devices (for example, the rotor lock mechanism 2) of the windmill occurs. The state in which the manual adjustment is possible as described above is hereinafter called manual state.

A plurality of methods of shifting to the manual state are provided, one of which is, for example, a command for shifting through remote-control operation. After confirmation that the shifting to the manual state has occurred, the rotor lock mechanism 2 is actuated to mechanically fix the rotor 1.

FIG. 3 shows the rotor lock mechanism 2, which is composed of: a lock disc 22 which is a circular plate connected to the rotor 1 and which has plural holes formed on its circumference; lock pins 21 inserted into the holes distributed on the circumference of the lock disc 22; and lock pin casings 23 each housing the lock pin 21 or inserting it into the lock disc 22.

After the shifting to the manual state, the lock pins21 housed in the lock pin casings 23 are taken out rightward in FIG. 3 from the lock pin casings 23 and are inserted into the holes formed in the lock disc 22. After the insertion of the lock pins 21 into the holes of the lock disc 22, the feather angle is further increased, that is, it is made larger than the pitch angle of the blade 10 in the feather state during deceleration. This increase in the feather angle varies from one model to another. For example, it is possible to change the pitch angle of the blade 10 in the feather state during deceleration, for example, from 85 degrees to 90 degrees (ideally 90 degrees).

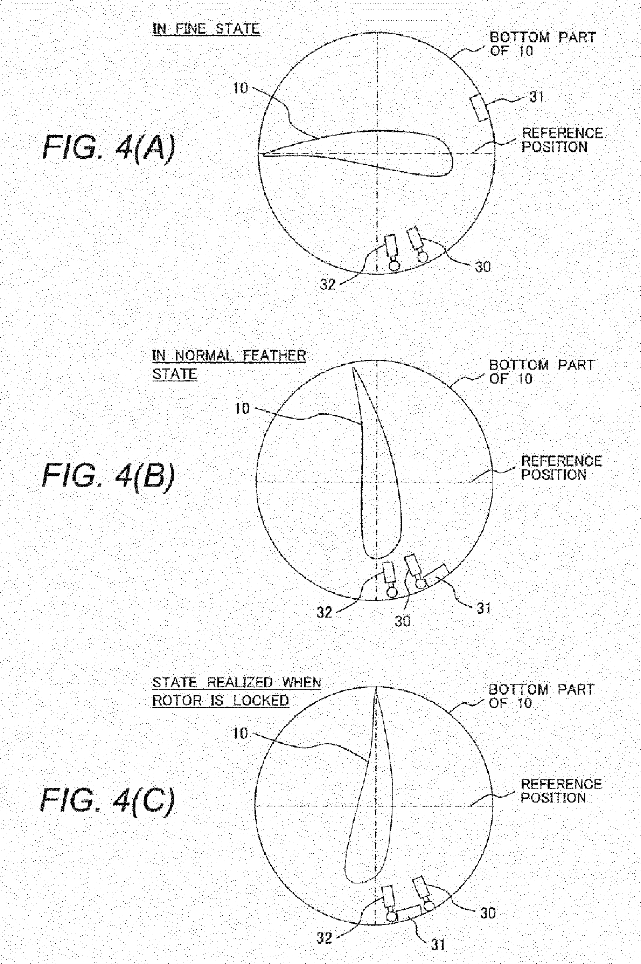

Next, with reference to FIGS. 4B and 4C, configuration of a blade pitch angle increase limiting device for limiting an increase in the blade pitch angle will be described.

As shown in the figures, the blade pitch angle increase limiting device of this embodiment is composed of: the blade 10; the pitch actuator 11; the pitch controller 12; a normal feather limiter switch 30 for providing limitation so that the pitch angle of the blade 10 does not become larger than a usually permitted maximum position; a limiter switch actuating plate 31 having a role of rotationally moving in the same direction as pitch angle rotation of the blade 10 and tapping and thereby actuating the normal feather limiter switch 30; and a rotor locking limiter switch 32 for limiting an increase in the blade pitch angle in a state in which the actuation of the normal feather limiter switch 30 is released and the rotor is locked.

The limiter switch actuating plate 31 is installed in the blade 10 and rotates together with the blade 10, and the normal feather limiter switch 30 and the rotor locking limiter switch 32 are installed near a base of the blade 10 and do not rotate together with the blade 10.

A position of the blade 10 during power generation is located at a position of a fine state (with a pitch angle of 0) of FIG. 4A. The position of FIG. 4A is called a fine state.

To stop the rotation of the rotor 1, the blade 10 is rotated by the pitch actuator 11 to increase its pitch angle, going into a feather state. However, the pitch angle cannot limitlessly be increased, and the pitch angle of the blade 10 can be rotated only up to the feather position limited by the position of the normal feather limiter switch 30 (hereinafter referred to as "normal feather position").

Specifically, the limiter switch actuating plate 31 taps the normal feather limiter switch 30, whereby the pitch actuator 11 stops its operation and the blade 10 no longer rotates further beyond the normal feather position. Such a state is the normal feather state (near a pitch angle of 90 degrees in the feather state during deceleration) shown in FIG. 4B.

As described above, even if the blade 10 is moved to the normal feather position, wind load that rotates the rotor 1 is imposed on the blade 10. Therefore, in the case of a "rotor-locking state" where the lock pins 21 is placed in the lock disc 22, great load is generated on the lock pins 21 and the lock disc 22, possibly leading to a decrease in lives of windmill components including the both.

In the manual state, to reduce fatigue load or static load in the rotor-locking state, the pitch angle of the blade 10 needs to be increased to be larger than that in the normal feather position in such a manner as to reduce such wind load that rotates the rotor 1. That is, a state realized when the rotor is locked as shown in FIG. 4C needs to be provided. To this end, the actuation of the normal feather limiter switch 30 that provides limitation so that the pitch angle does not increase to be larger than that in the normal feather position needs to be temporarily released.

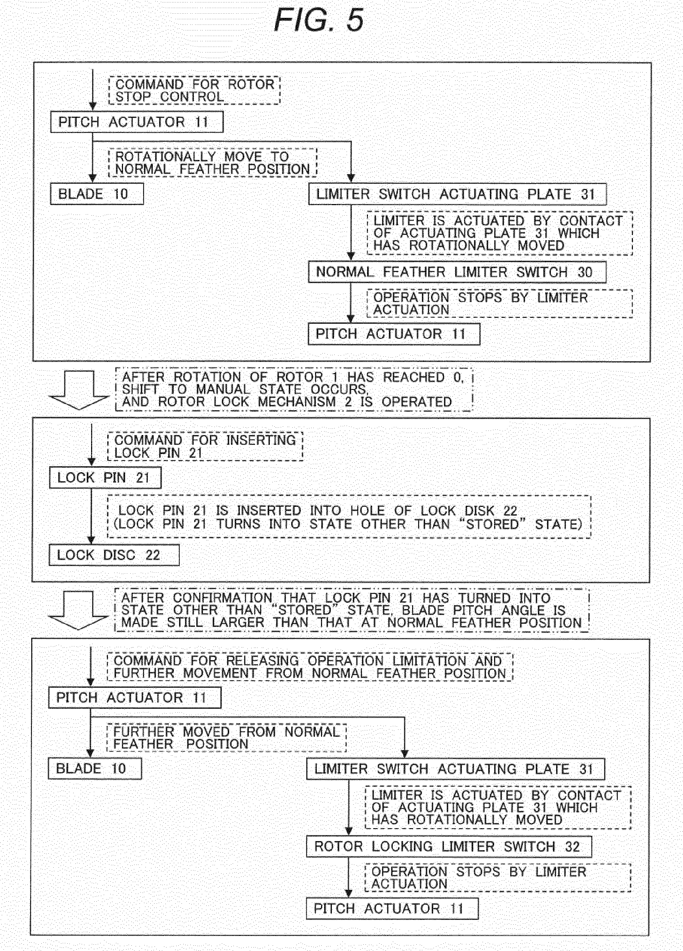

In view of the above, a flow concerning the blade pitch angle adjustment in the rotor-locking state can be described as in FIG. 5.

First, in response to the command for stopping, the pitch actuator 11 brings the pitch angle of the blade 10 to the normal feather position. At this point, the limiter switch actuating plate 31 also moves together with the blade 10 to tap the normal feather limiter switch 30, thereby stopping the actuation of the pitch actuator 11.

Next, it is confirmed on a monitor or the like that the rotation speed of the rotor 1 has reached 0 and the state of the windmill is turned into the manual state, so that the windmill can manually be operated. In this state, the lock pins 21 are moved and inserted into the holes of the lock disc 22. Even if the lock pins 21 are not placed in the holes of the lock disc 22, as long as they are in a state other than the "housed" state described with reference to FIG. 2, such a signal that releases the actuation of the normal feather limiter switch 30 is transmitted to the control board in the tower 5.

Then the pitch actuator 11 goes into a temporarily movable stat, in which the blade 10 is further rotated (increased) from the normal feather position. Note that the position at which the rotation is achieved is limited by the rotor locking limiter switch 32. A method of limiting the rotation position of the blade pitch angle by the rotor locking limiter switch 32 is the same as the method described concerning the normal feather limiter switch 30 above.

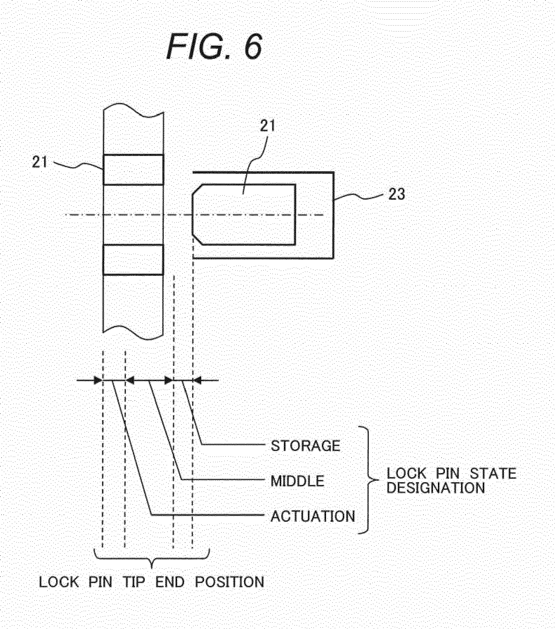

The feather angle may be increased in a case where the lock pin 21 is in the state shown in FIG. 6. That is, also in a state other than the state in which the lock pin 21 is housed in the lock pin casing 23 (a tip end position of the lock pin 21 is at a middle or actuating position shown in FIG. 6), the pitch angle of the blade 10 is increased to be larger than the pitch angle of the blade 10 in the feather state during deceleration.

This means that even if the lock pin 21 is not inserted in the hole of the lock disc 22 and the rotor 1 is not fixed, increasing the pitch angle of the blade 10 to make it larger than the pitch angle of the blade 10 in the feather state during deceleration reduces such wind load that rotates the rotor 1 as much as possible, and reduces the rotation of the rotor 1 as much as possible.

Obviously, also in the state in which the lock pin 21 is inserted in the hole of the lock disc 22 (hereinafter such a state is referred to as "rotor-locking state"), the pitch angle of the blade 10 is increased to be larger than the pitch angle of the blade 10 in the feather state during deceleration.

As a result of providing this embodiment as described above, increasing the pitch angle of the blade 10 to make it larger than the pitch angle of the blade 10 in the feather state during deceleration can reduce such wind load that rotates the rotor 1 and can reduce load imposed on the rotor lock mechanism 2.

Moreover, reducing the load imposed on the rotor lock mechanism 2 can maintain a stop state even if the lock disc 22 is reduced in size, can reduce a space required for the lock disc 22, and with a decrease in the size of the lock disc 22, can further provide a smaller lock pin 21 in a similar manner.

The present invention is not limited to the embodiment described above, and includes various modified examples. For example, the above embodiment has been described in detail for easier understanding of the present invention, and thus the present invention is not necessarily limited to the one that includes all the components described above. For some of the components of this embodiment, addition, deletion, and replacement can be made.

### REFERENCE SIGNS LIST

1...rotor, 2...rotor lock mechanism, 3... hub, 4...nacelle, 5...tower, 10...blade, 11...pitch actuator, 12...pitch controller, 21...lock pin, 22...lock disc, 23...lock pin casing, 30...normal feather limiter switch, 31...limiter switch actuating plate, and 32...rotor locking limiter switch.

## Claims

1. A windturbine generator comprising:
a rotor (1) composed of a hub (3) and a blade;
a nacelle (4) pivotably supporting the rotor (1) via a rotary shaft connected to the hub (3) and storing therein a power generator connected to the rotary shaft;
a tower (5) supporting the nacelle (4);
a pitch actuator changing and thereby adjusting a pitch angle of the blade; and
a pitch controller outputting a command value to the pitch actuator,
wherein, at the pitch controller, a detected command for stopping the rotor (1) is outputted to the pitch actuator,
after confirmation that shifting to a manual state has occurred and then the rotor is mechanically fixed, the pitch actuator increases the pitch angle of the blade to make the angle larger than a pitch angle of the blade in a feather state during deceleration based on the command for stopping the rotor (1) from the pitch controller, wherein the manual state is a state in which manual adjustment is possible.

2. The windturbine generator according to claim 1, further comprising a rotor lock mechanism housed in the nacelle (4) and mechanically fixing the rotor to avoid rotation thereof, wherein after confirmation that a rotation speed of the rotor (1) has reached 0 and the shifting to the manual state has occurred, the rotor (1) is mechanically fixed by the rotor lock mechanism, and then the pitch angle of the blade is increased to be larger than the pitch angle of the blade in the feather state during deceleration.

3. The windturbine generator according to claim 2,
wherein the rotor lock mechanism includes: a lock disc being a circular plate connected to the rotor (1) and having a plurality of holes on a circumference thereof; a lock pin (21) inserted into the hole distributed on the circumference of the lock disc (22); and a lock pin (21) casing housing the lock pin or making the lock pin (21) inserted into the lock disc, and after the confirmation that the rotation speed of the rotor has reached 0 and the shifting to the manual state, the lock pin is taken out from the lock pin casing and inserted into the lock disc to mechanically fix the rotor (1), and then the pitch angle of the blade is increased to be larger than the pitch angle of the blade in the feather state during deceleration.

4. The windturbine generator according to claim 3,
wherein, except for a case where the lock pin is stored in the lock pin casing (23) and the lock pin (21) is housed in the lock pin casing (23), the pitch angle of the blade is increased to be larger than the pitch angle of the blade in the feather state during deceleration.

5. The windturbine generator according to at least one of the claims 1 to 4, further comprising a blade pitch angle increase limiting device including: the blade, the pitch actuator, a pitch control box, a normal feather limiter switch (30) for providing limits so that the pitch angle of the blade does not become larger than an angle at a normally permitted maximum position; a limiter switch actuating plate (31) rotationally moving in the same direction as a direction of the pitch angle rotation of the blade and tapping and thereby actuating the normal feather limiter switch; and a rotor locking limiter switch for limiting an increase in the pitch angle of the blade in a state in which actuation of the normal feather limiter switch is released and the rotor (1) is locked.

6. The windturbine generator according to claim 5,
wherein, when increasing the pitch angle of the blade to make the angle larger than the pitch angle of the blade in the feather state during deceleration, the normal feather limiter switch is released.

7. A method of adjusting a blade pitch angle of a windturbine generator, the generator comprising:
a rotor (1) composed of a hub (3) and a blade;
a nacelle (4) pivotably supporting the rotor (1) via a rotary shaft connected to the hub (3) and storing therein a power generator connected to the rotary shaft;
a tower (5) supporting the nacelle;
a pitch actuator changing and thereby adjusting a pitch angle of the blade; and
a pitch controller outputting a command value to the pitch actuator,
wherein, to change and thereby adjust the pitch angle of the blade with the pitch actuator based on the command value from the pitch controller, a command for stopping the rotor (1) detected at the pitch controller is outputted to the pitch actuator,
after confirmation that shifting to a manual state has occurred and then the rotor (1) is mechanically fixed, the pitch actuator increases the pitch angle of the blade to make the angle larger than a pitch angle of the blade in a feather state during deceleration based on the command for stopping the rotor (1) from the pitch controller, wherein the manual state is a state in which manual adjustment is possible.

8. The method of adjusting a blade pitch angle of a windturbine generator according to claim 7,
wherein the windturbine generator includes a rotor lock mechanism housed in the nacelle (4) and mechanically fixing the rotor (1) to avoid rotation thereof, and after confirmation that a rotation speed of the rotor has reached 0 and the shifting to the manual state has occurred, the rotor is mechanically fixed by the rotor lock mechanism, and then the pitch angle of the blade is increased to be larger than the pitch angle of the blade in the feather state during deceleration.

9. The method of adjusting a blade pitch angle of a windturbine generator according to claim 8,
wherein the rotor lock mechanism includes: a lock disc (22) being a circular plate connected to the rotor (1) and having a plurality of holes on a circumference thereof; a lock pin (21) inserted into the hole distributed on the circumference of the lock disc (22); and a lock pin casing (23) housing the lock pin (21) or making the lock pin inserted into the lock disc (22), and after the confirmation that the rotation speed of the rotor has reached 0 and the shifting to the manual state, the lock pin (21) is taken out from the lock pin casing (23) and inserted into the lock disc (22) to mechanically fix the rotor, and then the pitch angle of the blade is increased to be larger than the pitch angle of the blade in the feather state during deceleration.

10. The method of adjusting a blade pitch angle of a windturbine generator according to claim 9,
wherein, except for a case where the lock pin (21) is stored in the lock pin casing (23) and the lock pin (21) is housed in the lock pin casing (23), the pitch angle of the blade is increased to be larger than the pitch angle of the blade in the feather state during deceleration.

11. The method of adjusting a blade pitch angle of a windturbine generator according to claim 10,
wherein the windturbine generator includes a blade pitch angle increase limiting device including: the blade, the pitch actuator, a pitch control box, a normal feather limiter switch (30) for providing limits so that the pitch angle of the blade does not become larger than an angle at a normally permitted maximum position; a limiter switch actuating plate (31) rotationally moving in the same direction as a direction of the pitch angle rotation of the blade and tapping and thereby actuating the normal feather limiter switch (30); and a rotor locking limiter switch (32) for limiting an increase in the pitch angle of the blade in a state in which actuation of the normal feather limiter switch (30) is released and the rotor (1) is locked, and
in the windturbine generator, in response to the command for stopping from the pitch controller, the pitch actuator changes the pitch angle of the blade to a normal feather position, the limiter switch actuating plate (31) moves together with the blade and taps the normal feather limiter switch to thereby stop the actuation of the pitch actuator, then after confirmation that the rotation speed of the rotor has reached 0, a state of a windmill is turned into a manual state which permits manual operation of the windmill, the lock pin (21) is moved in this state and inserted into the hole of the lock disc (22), then in a state other than a state in which the lock pin is stored in the lock pin casing (23) and the lock pin (21) is housed in the lock pin casing (23), the actuation of the normal feather limiter switch is released, putting the pitch actuator in a temporarily operable state, the blade is further rotated from the normal feather position in this state, and the pitch angle of the blade is increased to be larger than the pitch angle of the blade in the feather state during deceleration.

12. The method of adjusting a blade pitch angle of a windturbine generator according to claim 11,
wherein a position at which the pitch angle of the blade is rotated is limited by the rotor locking limiter switch (32).

## Patentansprüche

1. Windenergiegenerator, der Folgendes umfasst:
einen Rotor (1), der aus einer Nabe (3) und einem Rotorblatt besteht;
eine Gondel (4), die den Rotor (1) über eine Drehwelle, die mit der Nabe (3) verbunden ist, drehbar trägt, und worin ein Energiegenerator gelagert ist, der mit der Drehwelle verbunden ist;
einen Turm (5), der die Gondel (4) trägt;
einen Anstellwinkelaktuator, der einen Anstellwinkel des Rotorblatts ändert und dadurch einstellt; und
eine Anstellwinkelsteuereinrichtung, die einen Befehlswert an den Anstellwinkelaktuator ausgibt,
wobei an der Anstellwinkelsteuereinrichtung ein detektierter Befehl zum Anhalten des Rotors (1) an den Anstellwinkelaktuator ausgegeben wird,
wobei auf die Bestätigung, dass das Umschalten in einen manuellen Zustand eingetreten ist und daraufhin der Rotor mechanisch befestigt ist, der Anstellwinkelaktuator anhand des Befehls zum Anhalten des Rotors (1) von der Anstellwinkelsteuereinrichtung den Anstellwinkel des Rotorblatts vergrößert, um zu bewirken, dass der Winkel größer als ein Anstellwinkel des Rotorblatts in einem Fahnenstellungszustand während der Verlangsamung ist, wobei der manuelle Zustand ein Zustand ist, in dem eine manuelle Einstellung möglich ist.

2. Windenergiegenerator nach Anspruch 1, der ferner einen Rotorverriegelungsmechanismus umfasst, der in der Gondel (4) aufgenommen ist und den Rotor mechanisch befestigt, um seine Drehung zu vermeiden, wobei auf die Bestätigung, dass eine Drehzahl des Rotors (1) 0 erreicht hat und das Umschalten in den manuellen Zustand eingetreten ist, folgend der Rotor (1) durch den Rotorverriegelungsmechanismus mechanisch befestigt wird und anschließend der Anstellwinkel des Rotorblatts derart vergrößert wird, dass er größer als der Anstellwinkel des Rotorblatts im Fahnenstellungszustand während der Verlangsamung ist.

3. Windenergiegenerator nach Anspruch 2,
wobei der Rotorverriegelungsmechanismus Folgendes enthält: eine Verriegelungsscheibe, die eine kreisförmige Platte ist, die mit dem Rotor (1) verbunden ist, und auf einem Umfang davon mehrere Löcher aufweist; einen Verriegelungsbolzen (21), der in die Löcher eingefügt wird, die auf dem Umfang der Verriegelungsscheibe (22) verteilt sind; und ein Gehäuse des Verriegelungsbolzens (21), das den Verriegelungsbolzen aufnimmt oder bewirkt, dass der Verriegelungsbolzen (21) in die Verriegelungsscheibe eingefügt wird, und wobei auf die Bestätigung, dass die Drehzahl des Rotors 0 erreicht hat, und auf das Umschalten in den manuellen Zustand folgend der Verriegelungsbolzen aus dem Verriegelungsbolzengehäuse herausgenommen und in die Verriegelungsscheibe eingefügt wird, um den Rotor (1) mechanisch zu befestigen und anschließend der Anstellwinkel des Rotorblatts derart vergrößert wird, dass er größer als der Anstellwinkel des Rotorblatts im Fahnenstellungszustand während der Verlangsamung ist.

4. Windenergiegenerator nach Anspruch 3,
wobei mit Ausnahme eines Falles, in dem der Verriegelungsbolzen im Verriegelungsbolzengehäuse (23) gelagert ist und der Verriegelungsbolzen (21) im Verriegelungsbolzengehäuse (23) aufgenommen ist, der Anstellwinkel des Rotorblatts derart vergrößert wird, dass er größer als der Anstellwinkel des Rotorblatts im Fahnenstellungszustand während der Verlangsamung ist.

5. Windenergiegenerator nach mindestens einem der Ansprüche 1 bis 4, der ferner eine Vorrichtung zum Begrenzen des Vergrößerns des Rotorblattanstellwinkels umfasst, die Folgendes enthält: das Rotorblatt, den Anstellwinkelaktuator, einen Anstellwinkelsteuerkasten, einen Begrenzungsschalter (30) der normalen Fahnenstellung zum Bereitstellen von Begrenzungen, derart, dass der Anstellwinkel des Rotorblatts nicht größer als ein Winkel in einer normalerweise zugelassenen Maximalposition wird; eine Begrenzungsschalterbetätigungsplatte (31), die sich in derselben Richtung wie eine Richtung der Anstellwinkeldrehung des Rotorblatts drehend bewegt und den Begrenzungsschalter der normalen Fahnenstellung berührt und dadurch betätigt; und einen Rotorverriegelungsbegrenzungsschalter zum Begrenzen einer Vergrößerung des Anstellwinkels des Rotorblatts in einem Zustand, in dem die Betätigung des Begrenzungsschalters der normalen Fahnenstellung freigegeben ist und der Rotor (1) verriegelt ist.

6. Windenergiegenerator nach Anspruch 5,
wobei dann, wenn der Anstellwinkel des Rotorblatts vergrößert wird, um zu bewirken, dass der Winkel größer als der Anstellwinkel des Rotorblatts im Fahnenstellungszustand während der Verlangsamung ist, der Begrenzungsschalter der normalen Fahnenstellung freigegeben ist.

7. Verfahren zum Einstellen eines Rotorblattanstellwinkels eines Windenergiegenerators, wobei der Generator Folgendes umfasst:
einen Rotor (1), der aus einer Nabe (3) und einem Rotorblatt besteht;
eine Gondel (4), die den Rotor (1) über eine Drehwelle, die mit der Nabe (3) verbunden ist, drehbar trägt, und worin ein Energiegenerator gelagert ist, der mit der Drehwelle verbunden ist;
einen Turm (5), der die Gondel trägt;
einen Anstellwinkelaktuator, der einen Anstellwinkel des Rotorblatts ändert und dadurch einstellt; und
eine Anstellwinkelsteuereinrichtung, die einen Befehlswert an den Anstellwinkelaktuator ausgibt,
wobei ein Befehl zum Anhalten des Rotors (1), der an der Anstellwinkelsteuereinrichtung detektiert wird, an den Anstellwinkelaktuator ausgegeben wird, um anhand des Befehlswerts von der Anstellwinkelsteuereinrichtung den Anstellwinkel des Rotorblatts mit dem Anstellwinkelaktuator zu ändern und dadurch einzustellen,
wobei auf die Bestätigung, dass das Umschalten in einen manuellen Zustand eingetreten ist und daraufhin der Rotor (1) mechanisch befestigt ist, folgend der Anstellwinkelaktuator anhand des Befehls zum Anhalten des Rotors (1) von der Anstellwinkelsteuereinrichtung den Anstellwinkel des Rotorblatts vergrößert, um zu bewirken, dass der Winkel größer als ein Anstellwinkel des Rotorblatts in einem Fahnenstellungszustand während der Verlangsamung ist, wobei der manuelle Zustand ein Zustand ist, in dem eine manuelle Einstellung möglich ist.

8. Verfahren zum Einstellen eines Rotorblattanstellwinkels eines Windenergiegenerators nach Anspruch 7,
wobei der Windenergiegenerator einen Rotorverriegelungsmechanismus enthält, der in der Gondel (4) aufgenommen ist und den Rotor (1) mechanisch befestigt, um seine Drehung zu vermeiden, und wobei auf die Bestätigung, dass eine Drehzahl des Rotors 0 erreicht hat und das Umschalten in den manuellen Zustand eingetreten ist, folgend der Rotor durch den Rotorverriegelungsmechanismus mechanisch befestigt wird und anschließend der Anstellwinkel des Rotorblatts derart vergrößert wird, dass er größer als der Anstellwinkel des Rotorblatts im Fahnenstellungszustand während der Verlangsamung ist.

9. Verfahren zum Einstellen eines Rotorblattanstellwinkels eines Windenergiegenerators nach Anspruch 8,
wobei der Rotorverriegelungsmechanismus Folgendes enthält: eine Verriegelungsscheibe (22), die eine kreisförmige Platte ist, die mit dem Rotor (1) verbunden ist, und auf einem Umfang davon mehrere Löcher aufweist; einen Verriegelungsbolzen (21), der in die Löcher eingefügt wird, die auf dem Umfang der Verriegelungsscheibe (22) verteilt sind; und ein Verriegelungsbolzengehäuse (23), das den Verriegelungsbolzen (21) aufnimmt oder bewirkt, dass der Verriegelungsbolzen in die Verriegelungsscheibe (22) eingefügt wird, und wobei auf die Bestätigung, dass die Drehzahl des Rotors 0 erreicht hat, und auf das Umschalten in den manuellen Zustand folgend der Verriegelungsbolzen (21) aus dem Verriegelungsbolzengehäuse (23) herausgenommen und in die Verriegelungsscheibe (22) eingefügt wird, um den Rotor mechanisch zu befestigen und anschließend der Anstellwinkel des Rotorblatts derart vergrößert wird, dass er größer als der Anstellwinkel des Rotorblatts im Fahnenstellungszustand während der Verlangsamung ist.

10. Verfahren zum Einstellen eines Rotorblattanstellwinkels eines Windenergiegenerators nach Anspruch 9,
wobei mit Ausnahme eines Falles, in dem der Verriegelungsbolzen (21) im Verriegelungsbolzengehäuse (23) gelagert ist und der Verriegelungsbolzen (21) im Verriegelungsbolzengehäuse (23) aufgenommen ist, der Anstellwinkel des Rotorblatts derart vergrößert wird, dass er größer als der Anstellwinkel des Rotorblatts im Fahnenstellungszustand während der Verlangsamung ist.

11. Verfahren zum Einstellen eines Rotorblattanstellwinkels eines Windenergiegenerators nach Anspruch 10,
wobei der Windenergiegenerator eine Vorrichtung zum Begrenzen der Vergrößerung des Rotorblattanstellwinkels enthält, die Folgendes enthält: das Rotorblatt, den Anstellwinkelaktuator, einen Anstellwinkelsteuerkasten, einen Begrenzungsschalter (30) der normalen Fahnenstellung zum Bereitstellen von Begrenzungen, derart, dass der Anstellwinkel des Rotorblatts nicht größer als ein Winkel in einer normalerweise zugelassenen Maximalposition wird; eine Begrenzungsschalterbetätigungsplatte (31), die sich in derselben Richtung wie eine Richtung der Anstellwinkeldrehung des Rotorblatts drehend bewegt und den Begrenzungsschalter (30) der normalen Fahnenstellung berührt und dadurch betätigt; und einen Rotorverriegelungsbegrenzungsschalter (32) zum Begrenzen einer Vergrößerung des Anstellwinkels des Rotorblatts in einem Zustand, in dem die Betätigung des Begrenzungsschalters (30) der normalen Fahnenstellung freigegeben ist und der Rotor (1) verriegelt ist, und
der Anstellwinkelaktuator im Windenergiegenerator als Antwort auf den Befehl zum Anhalten von der Anstellwinkelsteuereinrichtung den Anstellwinkel des Rotorblatts in eine normale Fahnenstellungsposition ändert, die Begrenzungsschalterbetätigungsplatte (31) sich zusammen mit dem Rotorblatt bewegt und den Begrenzungsschalter der normalen Fahnenstellung berührt, um dadurch die Betätigung durch den Anstellwinkelaktuator anzuhalten, wobei daraufhin auf die Bestätigung, dass die Drehzahl des Rotors 0 erreicht hat, folgend ein Zustand der Windkraftanlage in einen manuellen Zustand geändert wird, der den manuellen Betrieb der Windkraftanlage zulässt, der Verriegelungsbolzen (21) in diesem Zustand bewegt und in das Loch der Verriegelungsscheibe (22) eingefügt wird, wobei anschließend in einem Zustand, der von einem Zustand abweicht, in dem der Verriegelungsbolzen im Verriegelungsbolzengehäuse (23) gelagert ist und der Verriegelungsbolzen (21) im Verriegelungsbolzengehäuse (23) aufgenommen ist, die Betätigung des Begrenzungsschalters für die normale Fahnenstellung freigegeben wird, wobei der Anstellwinkelaktuator in einen zeitweise betreibbaren Zustand versetzt wird, das Rotorblatt aus der normalen Fahnenstellungsposition in diesem Zustand weiter gedreht wird und der Anstellwinkel des Rotorblatts derart vergrößert wird, dass er größer als der Anstellwinkel des Rotorblatts in der Fahnenstellung während der Verlangsamung ist.

12. Verfahren zum Einstellen eines Rotorblattanstellwinkels eines Windenergiegenerators nach Anspruch 11,
wobei eine Position, in der der Anstellwinkel des Rotorblatts gedreht wird, durch den Rotorverriegelungsbegrenzungsschalter (32) begrenzt wird.

## Revendications

1. Générateur de turbine éolienne comprenant :
un rotor (1) composé d'un moyeu (3) et d'une pale ;
une nacelle (4) qui supporte le rotor (1) de façon pivotante via un arbre rotatif connecté au moyeu (3) et qui stocke à l'intérieur un générateur de puissance connecté à l'arbre rotatif ;
une tour (5) qui supporte la nacelle (4) ;
un actionneur de pas qui change et qui ajuste ainsi un angle de pas de la pale ; et
un contrôleur de pas qui délivre une valeur d'ordre à l'actionneur de pas,
dans lequel, dans le contrôleur de pas, un ordre détecté pour arrêter le rotor (1) est délivré à l'actionneur de pas,
après confirmation qu'une commutation vers un état manuel s'est produite et que le rotor est ensuite mécaniquement fixé, l'actionneur de pas augmente l'angle de pas de la pale pour rendre l'angle plus important qu'un angle de pas de la pale dans un état en drapeau pendant la décélération sur la base de l'ordre pour arrêter le rotor (1) depuis le contrôleur de pas, dans lequel l'état manuel est un état dans lequel un ajustement manuel est possible.

2. Générateur de turbine éolienne selon la revendication 1, comprenant en outre un mécanisme de blocage de rotor logé dans la nacelle (4) et fixant mécaniquement le rotor pour éviter une rotation de celui-ci, dans lequel, après confirmation qu'une vitesse de rotation du rotor (1) a atteint zéro et que la commutation vers l'état manuel s'est produite, le rotor (1) est mécaniquement fixé par le mécanisme de blocage de rotor, et ensuite l'angle de pas de la pale est augmenté pour être plus élevé que l'angle du pas de la pale dans l'état en drapeau pendant la décélération.

3. Générateur de turbine éolienne selon la revendication 2, dans lequel le mécanisme de blocage de rotor inclut :
un disque de blocage qui est une plaque circulaire connectée au rotor (1) et ayant une pluralité de trous sur sa circonférence ; une broche de blocage (21) insérée dans le trou distribué sur la circonférence du disque de blocage (22) ; et un boîtier pour broche de blocage (21) qui abrite la broche de blocage ou qui fait que la broche de blocage (21) est introduite dans le disque de blocage, et après la confirmation que la vitesse de rotation du rotor a atteint zéro et la commutation à l'état manuel, la broche de blocage est sortie du boîtier pour broche de blocage et est insérée dans le disque de blocage pour fixer mécaniquement le rotor (1), et ensuite l'angle du pas de la pale est augmenté pour être plus élevé que l'angle du pas de la pale dans l'état en drapeau pendant la décélération.

4. Générateur de turbine éolienne selon la revendication 3, dans lequel, à l'exception du cas dans lequel la broche de blocage est stockée dans le boîtier pour broche de blocage (23) et que la broche de blocage (21) est logée dans le boîtier pour broche de blocage (23), l'angle du pas de la pale est augmenté pour être plus élevé que l'angle du pas de la pale dans l'état en drapeau pendant la décélération.

5. Générateur de turbine éolienne selon l'une au moins des revendications 1 à 4, comprenant en outre un dispositif limiteur d'augmentation d'angle du pas de la pale, qui inclut : la pale, l'actionneur de pas, une boîte de commande de pas, un commutateur limiteur de drapeau normal (30) pour imposer des limites de telle façon que l'angle de pas de la pale ne devient pas plus élevé qu'un angle à une position maximum normalement permise ; une plaque d'actionnement de commutateur limiteur (31) qui se déplace en rotation dans la même direction qu'une direction de la rotation de l'angle de pas de la pale et qui attaque et ainsi qui actionne le commutateur limiteur de drapeau normal ; et un commutateur limiteur de blocage de rotor pour limiter une augmentation de l'angle de pas de la pale dans un état dans lequel l'actionnement du commutateur limiteur de drapeau normal est relâché et que le rotor (1) est bloqué.

6. Générateur de turbine éolienne selon la revendication 5,
dans lequel, lors de l'augmentation de l'angle de pas de la pale pour rendre l'angle plus élevé que l'angle de pas de la pale dans l'état en drapeau pendant la décélération, le commutateur limiteur de drapeau normal est relâché.

7. Procédé pour ajuster un angle de pas d'une pale d'un générateur de turbine éolienne, le générateur comprenant :
un rotor (1) composé d'un moyeu (3) et d'une pale ;
une nacelle (4) qui supporte le rotor (1) en pivotement via un arbre rotatif connecté au moyeu (3) et stockant à l'intérieur un générateur de puissance connecté à l'arbre rotatif ;
une tour (5) qui supporte la nacelle ;
un actionneur de pas qui change et qui ajuste ainsi un angle de pas de la pale ; et
un contrôleur de pas qui délivre une valeur d'ordre à l'actionneur de pas,
dans lequel, pour changer et ainsi pour ajuster l'angle de pas de la pale avec l'actionneur de pas sur la base de la valeur d'ordre provenant du contrôleur de pas, un ordre pour arrêter le rotor (1), détecté au niveau du contrôleur de pas, est délivré vers l'actionneur de pas,
après confirmation qu'une commutation vers un état manuel s'est produite et que le rotor (1) est ensuite mécaniquement fixé, l'actionneur de pas augmente l'angle de pas de la pale pour rendre l'angle plus élevé qu'un angle de pas de la pale dans un état en drapeau pendant la décélération sur la base de l'ordre pour arrêter le rotor (1) provenant du contrôleur de pas, dans lequel l'état manuel est un état dans lequel un ajustement manuel est possible.

8. Procédé pour ajuster un angle de pas d'une pale d'un générateur de turbine éolienne selon la revendication 7,
dans lequel le générateur de turbine éolienne inclut un mécanisme de blocage de rotor logé dans la nacelle (4) et fixant mécaniquement le rotor (1) pour éviter une rotation de celui-ci et, après confirmation qu'une vitesse de rotation du rotor a atteint zéro et que la commutation à l'état manuel s'est produite, le rotor est mécaniquement fixé par le mécanisme de blocage de rotor, et ensuite l'angle de pas de la pale est augmenté pour être plus élevé que l'angle de pas de la pale dans l'état en drapeau pendant la décélération.

9. Procédé pour ajuster un angle de pas d'une pale d'un générateur de turbine éolienne selon la revendication 8,
dans lequel le mécanisme de blocage de rotor inclut : un disque de blocage (22) qui est une plaque circulaire connectée au rotor (1) et ayant une pluralité de trous sur sa circonférence ;
une broche de blocage (21) insérée dans le trou distribué sur la circonférence du disque de blocage (22) ; et un boîtier pour broche de blocage (23) qui loge la broche de blocage (21) ou qui fait que la broche de blocage est insérée dans le disque de blocage (22), et après confirmation que la vitesse de rotation du rotor a atteint zéro et la commutation à l'état manuel, la broche de blocage (21) est enlevée hors du boîtier pour broche de blocage (23) et est insérée dans le disque de blocage (22) pour fixer mécaniquement le rotor, et ensuite l'angle de pas de la pale est augmenté pour être plus élevé que l'angle de pas de la pale dans l'état en drapeau pendant la décélération.

10. Procédé pour ajuster un angle de pas d'une pale d'un générateur de turbine éolienne selon la revendication 9,
dans lequel, à l'exception d'un cas dans lequel la broche de blocage (21) est stockée dans le boîtier pour broche de blocage (23) et que la broche de blocage (21) est logée dans le boîtier pour broche de blocage (23), l'angle de pas de la pale est augmenté pour être plus élevé que l'angle de pas de la pale dans l'état en drapeau pendant la décélération.

11. Procédé pour ajuster un angle de pas d'une pale d'un générateur de turbine éolienne selon la revendication 10,
dans lequel le générateur de turbine éolienne inclut un dispositif limiteur d'augmentation de l'angle de pas de la pale qui inclut : la pale, l'actionneur de pas, une boîte de commande de pas, un commutateur limiteur de drapeau normal (30) pour imposer des limites de telle façon que l'angle de pas de la pale devient pas plus élevé qu'un angle à une position maximum normalement permise ; une plaque d'actionnement de commutateur limiteur (31) qui se déplace en rotation dans la même direction qu'une direction de la rotation de l'angle de pas de la pale et qui attaque et ainsi qui actionne le commutateur limiteur de drapeau normal (30) ; et un commutateur limiteur de blocage de rotor (32) pour limiter une augmentation de l'angle de pas de la pale dans un état dans lequel l'actionnement du commutateur limiteur de drapeau normal (30) est relâché et que le rotor (1) est bloqué, et
dans le générateur de turbine éolienne, en réponse à l'ordre pour arrêter provenant du contrôleur de pas, l'actionneur de pas change l'angle de pas de la pale à une position en drapeau normal, la plaque d'actionnement du commutateur limiteur (31) se déplace conjointement avec la pale et attaque le commutateur limiteur de drapeau normal pour arrêter ainsi l'actionnement de l'actionneur de pas, et ensuite, après confirmation que la vitesse de rotation du rotor a atteint zéro, l'état de la turbine éolienne est passé dans un état manuel qui permet un fonctionnement manuel de la turbine éolienne, la broche de blocage (21) est déplacée dans cet état et insérée dans le trou du disque de blocage (22), ensuite dans un état autre qu'un état dans lequel la broche de blocage est stockée dans le boîtier pour broche de blocage (23) et la broche de blocage (21) est logée dans le boîtier pour broche de blocage (23), l'actionnement du commutateur limiteur de drapeau normal est relâché, plaçant l'actionneur de pas dans un état de fonctionnement temporaire, la pale est en outre tournée depuis la position en drapeau normal dans cet état, et l'angle de pas de la pale est augmenté pour être plus élevé que l'angle de pas de la pale dans l'état en drapeau pendant la décélération.

12. Procédé pour ajuster un angle de pas d'une pale d'un générateur de turbine éolienne selon la revendication 11,
dans lequel une position à laquelle l'angle de pas de la pale est tourné est limitée par le commutateur limiteur de blocage de rotor (32).
